# EUROPEAN PATENT APPLICATION

(11) **EP 4 838 440 A1**
(43) Date of publication of application: **11.11.2026**
(21) Application number: 25800850.7
(22) Date of filing: 09.05.2025
(51) Int. Cl.: G06Q 10/20, G06F 16/3329, G06F 16/9032, G06N 20/00

(54) **METHOD FOR GENERATING VEHICLE DIAGNOSTIC PLAN, APPARATUS, ELECTRONIC DEVICE, AND STORAGE MEDIUM**

(30) Priority: 18.03.2025 CN 202510316702
(71) Applicant: Launch Tech Co., Ltd, Longgang District Shenzhen Guangdong 518000 (CN)
(72) Inventor: LIU, Xin, Shenzhen, Guangdong 518000 (CN); JIANG, Wentian, Shenzhen, Guangdong 518000 (CN)
(74) Representative: Taor, Simon Edward William
(86) International application number: PCT/CN2025/093679
(87) International publication number: WO 2026/194037

(57) **Abstract**

The present application discloses a method and apparatus for generating vehicle diagnostic solution, an electronic device, and a storage medium. In the method, a user profile is generated based on vehicle diagnostic data and historical dialogue information of a user, and then a corresponding diagnostic rule is invoked according to a user-type indicated in the user profile, to generate different vehicle diagnostic solutions for different user-types. The diagnostic rule includes using a language model of prompt words corresponding to user-types. The vehicle diagnostic solution is generated based on the language model of prompt words corresponding to user-types, which can meet personalized requirements of different users and improve targeted nature and practicality of the vehicle diagnostic solution.

## Description

### CROSS-REFERENCE TO RELATED APPLICATION(S)

The present application claims priority to Chinese Patent Application No. 202510316702.9, filed March 18, 2025, and entitled "METHOD AND APPARATUS FOR GENERATING VEHICLE DIAGNOSTIC SOLUTION, ELECTRONIC DEVICE, AND STORAGE MEDIUM", the entire disclosure of which is hereby incorporated by reference.

### TECHNICAL FIELD

This disclosure relates to the field of vehicle diagnostic technology, in particular to a method and apparatus for generating vehicle diagnostic solution, an electronic device, and a storage medium.

### BACKGROUND

With the development of artificial intelligence technology, the natural language processing technology has gradually been introduced into the field of vehicle diagnosis, such as the intelligent diagnosis system based on chat generative pre-trained transformer (ChatGPT), which can understand the question of the user through dialogue and provide diagnostic suggestions.

In the related art, by analyzing the vehicle diagnostic data and the question of the user, the intelligent vehicle diagnostic system mainly generates the vehicle diagnostic solution by using the preset diagnosis rule or the machine learning model. However, different users have different requirements, and the diagnosis solution only provides a unified diagnosis solution, resulting in obtaining the same diagnosis solution by different users.

### SUMMARY

The present application provides a method and apparatus for generating vehicle diagnostic solution, an electronic device, and a storage medium, which can provide a user with a targeted vehicle diagnostic solution. The technical solution is as follows.

In a first aspect, a method for generating a vehicle diagnostic solution is provided. The method is applicable to a vehicle diagnostic scenario and includes: obtaining dialogue information and vehicle diagnostic data, where the dialogue information is a dialogue input by a user at an electronic device, the vehicle diagnostic data is detection data of a vehicle obtained by the electronic device, and both the vehicle and the electronic device belong to a vehicle diagnostic system; generating a user profile based on the dialogue information and the vehicle diagnostic data, where the user profile includes a first user-type determined from multiple user-types that are preset, and the first user-type corresponds to the user; and invoking a first model based on the first user-type to generate the vehicle diagnostic solution, and displaying the vehicle diagnostic solution to the user, where the first model includes a language model and the vehicle diagnostic solution requirements of the user.

In combination with the first aspect, generating the user profile based on the dialogue information and the vehicle diagnostic data includes: inputting the dialogue information and the vehicle diagnostic data into a second model, to obtain the user profile generated by the second model, where the second model is used to calculate a weight of each of the multiple user-types, and a user-type with a highest weight is determined as the first user-type, and the weight indicates a degree of correspondence between the dialogue information and the user-type.

In combination with the first aspect, in some implementations provided in the first aspect, the second model is obtained by: inputting the dialogue information and the vehicle diagnostic data, and training to calculate the weight of each of the multiple user-types, until the weight of each of the multiple user-types is the same as a preset weight.

In combination with the first aspect, in some implementations provided in the first aspect, based on the first user-type, invoking the first model to generate the vehicle diagnostic solution includes: invoking first prompt information based on the first user-type to be input into the first model to generate the vehicle diagnostic solution, where the first prompt information is a prompt word indicating the first user-type.

In combination with the first aspect, in some implementations provided in the first aspect, the first model is obtained by: inputting the user-type and corresponding prompt information, and training to output the vehicle diagnostic solution, until the vehicle diagnostic solution is consistent with a preset vehicle diagnostic solution.

In combination with the first aspect, in some implementations provided in the first aspect, the user-type includes a first user, a second user, a third user, and a fourth user, the first user indicates a user who needs a detailed diagnostic solution, the second user indicates a user who needs a brief diagnostic solution, the third user indicates a user who needs cost and time control, and the fourth user indicates a user who needs a price and purchase manner of a vehicle component.

In combination with the first aspect, in some implementations provided in the first aspect, the electronic device includes a diagnostic instrument and a user terminal, the diagnostic instrument is in communication connection with the vehicle, and the user terminal is in communication connection with the vehicle and/or the diagnostic instrument.

It should be noted that, in the absence of conflict, the features of the various implementations of the first aspect can be combined with each other, and any combination of features in different implementations is also within the protection scope of the present application. That is, the multiple implementations described above can also be arbitrarily combined according to actual requirements.

In a second aspect, an electronic device is provided. The electronic device includes: a storage module configured to store dialogue information of a user and vehicle diagnostic data of a vehicle; a user-profile generating module configured to input the dialogue information and the vehicle diagnostic data into a second model, to obtain a user profile; a vehicle-diagnostic-solution generating module configured to invoke a first model based on a first user-type in the user profile to generate a vehicle diagnostic solution; and a display module configured to display the vehicle diagnostic solution to the user.

In a third aspect, a computer device is provided. The computer device includes a memory, a processor, and a computer program stored in the memory. The processor executes the computer program to implement the method as described in the first aspect or any one of the implementations of the first aspect.

In a fourth aspect, a computer-readable storage medium is provided. The computer-readable storage medium stores computer instructions. When executed by a processor, the computer instructions implement the method as described in the first aspect or any one of the implementations of the first aspect.

In a fifth aspect, a chip is provided. The chip is applied to an electronic device. The chip includes one or more processors. The processor is configured to invoke computer instructions to cause the electronic device to execute the method as described in the first aspect or any one of the implementations of the first aspect.

In embodiments of the present application, the user profile is generated based on the vehicle diagnostic data and the historical dialogue information of the user, and the corresponding diagnostic rule is invoked according to the user-type indicated in the user profile, to generate different vehicle diagnostic solutions for users of different user-types. Compared with the related art, by adopting the method for generating the vehicle diagnostic solution provided in embodiments of the present application, the personalized requirements of different users can be met and the targeted nature and practicality of the vehicle diagnostic solution can be improved.

### BRIEF DESCRIPTION OF THE DRAWINGS

To more clearly illustrate technical solutions in embodiments of the present application, drawings required for use in the description of the embodiments will be briefly introduced below. Obviously, the drawings described below are merely some embodiments of the present application. For those of ordinary skill in the art, other drawings can be obtained based on these drawings without creative work.
FIG. 1 is a schematic diagram of a vehicle diagnostic communication system provided in embodiments of the present application.
FIG. 2 is a flow chart of generating a vehicle diagnostic solution by an electronic device provided in embodiments of the present application.
FIG. 3 is a flow chart of generating a user profile by using a second model provided in embodiments of the present application.
FIG. 4 is a flow chart of generating a vehicle diagnostic solution by using a first model provided in embodiments of the present application.
FIG. 5 is a schematic diagram of obtaining a vehicle diagnostic solution by a user provided in embodiments of the present application.
FIG. 6 is a schematic diagram of modules of an electronic device provided in embodiments of the present application.
FIG. 7 is a schematic structural diagram of a computer device provided in embodiments of the present application.
FIG. 8 is a schematic diagram of a computer-readable storage medium provided in embodiments of the present application.

### DETAILED DESCRIPTION

To make objectives, technical solutions, and advantages of the present application clearer, implementations of the present application will be further described in detail below in conjunction with accompanying drawings.

It should be understood that the "multiple" mentioned in the present application refers to two or more. In the description of the present application, unless otherwise specified, "/" means "or", for example, A/B can mean A or B; "and/or" herein is merely a description of the association relationship of associated objects, indicating that there can be three relationships, for example, A and/or B can mean: A alone, both A and B, and B alone. In addition, to facilitate the clear description of the technical solution of the present application, the words "first" and "second" are used to distinguish between the same or similar items with basically the same functions and effects. Those of ordinary skill in the art can understand that the words "first" and "second" do not limit the quantity and execution order, and the words "first" and "second" do not limit the items referred to are different.

The phrases such as "one embodiment" or "some embodiments" described in the present application mean that the specific features, structures, or characteristics described in the embodiment are included in one or more embodiments of the present application. Therefore, the phrases such as "in one embodiment", "in some embodiments", "in some other embodiments", "in some other embodiments" that appear in the differences in the present application do not necessarily refer to the same embodiment, but mean "one or more but not all embodiments", unless otherwise specifically emphasized in other ways. In addition, the terms "including", "comprising", "having" and their variations all mean "including but not limited to", unless otherwise specifically emphasized in other ways.

For ease of understanding, some relevant concepts involved in the embodiments of the present application are first explained as follows.
1. "Vehicle diagnostic solution" refers to a method of comprehensive vehicle detection, fault location, and performance analysis through technical means, aiming to identify vehicle problems and provide solutions. In embodiments of the present application, the vehicle diagnostic solution is a test report after vehicle fault detection.
2. "User profile" is a user model formed by collecting and analyzing multidimensional data of users and abstracting typical features, which is used to accurately describe user requirements, behavioral habits, and potential value. In embodiments of the present application, the user profile is used to describe the requirements of the user who obtains the vehicle diagnostic solution.

The above are some related concepts involved in the embodiments of the present application.

With the development of artificial intelligence technology, the natural language processing technology has gradually been introduced into the field of vehicle diagnosis. For example, the vehicle diagnostic system based on language model can understand the question of the user through the dialogue information of the user and provide diagnostic suggestions. However, the current vehicle diagnostic solution based on language model is generated only using the preset diagnostic rule or preset output format, resulting in the same diagnosis solution for all users, which cannot meet the requirements of different users.

Therefore, how to generate targeted vehicle diagnostic solutions for different users is a problem to be solved.

The embodiments of the present application provide a method and apparatus for generating vehicle diagnostic solution, an electronic device, and a storage medium. In the method, a user profile is generated based on vehicle diagnostic data and historical dialogue information of a user, and then a corresponding diagnostic rule is invoked according to a user-type indicated in the user profile, to generate different vehicle diagnostic solutions for users of different user-types. The diagnostic rule includes using a language model of prompt words corresponding to user-types. The vehicle diagnostic solution is generated based on the language model of prompt words corresponding to user-types. The vehicle diagnostic solution obtained by the user can meet the personalized requirements of the user, thereby improving the targeted nature and practicality of the vehicle diagnostic solution.

The application scenarios of the embodiments of the present application are described below.

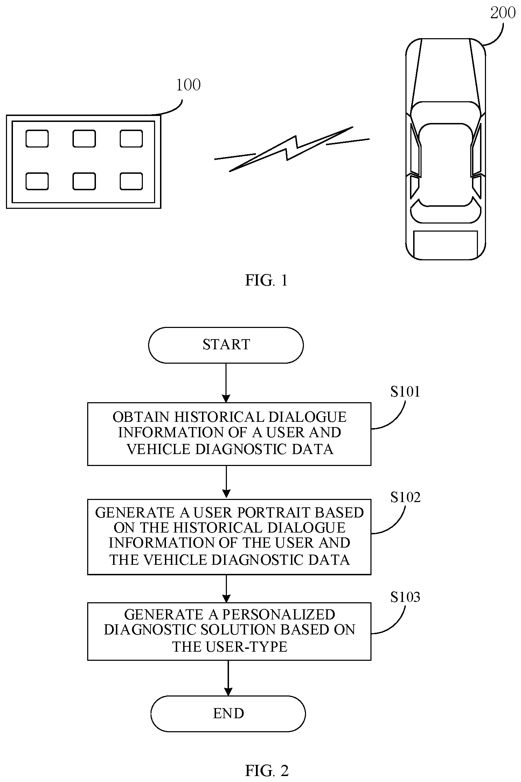

FIG. 1 is a schematic diagram of a vehicle diagnostic communication system provided in embodiments of the present application. The vehicle diagnostic communication system may be referred to as a vehicle diagnostic system and includes an electronic device 100 and a vehicle 200. The electronic device 100 and the vehicle 200 have established a communication connection.

The electronic device 100 may be distributed throughout the communication system and may be stationary or mobile. In some embodiments of the present application, the electronic device 100 may include a diagnostic instrument, a user terminal device, a mobile device, a mobile station, a mobile unit, a machine to machine (M2M) terminal, a wireless unit, a remote unit, a terminal agent, a mobile client, and the like.

In some implementations, the electronic device 100 and the vehicle 200 may establish a connection via a wireless interface, such as a wireless network, and the electronic device 100 obtains vehicle diagnostic data of the vehicle 200. The electronic device 100 and the vehicle 200 may also establish a connection via a wired interface, such as an on-board diagnostics (OBD) interface, and the electronic device 100 obtains the vehicle diagnostic data of the vehicle 200.

The electronic device 100 can detect the vehicle 200 and obtain the vehicle diagnostic data. The vehicle diagnostic data is used to detect faults, optimize performance, or evaluate vehicle health. Exemplarily, the vehicle diagnostic data includes vehicle diagnostic trouble codes (DTC), vehicle real-time sensor data, vehicle emission data, and vehicle electronic control unit (ECU) control data.

In embodiments of the present application, the electronic device 100 can obtain the vehicle diagnostic data from the vehicle 200, and then analyze the user profile based on the historical dialogue information of the user stored in the electronic device 100 together with the vehicle diagnostic data, to determine the user-type to which the user belongs, where the user-type is the first user-type. The historical dialogue information is the dialogue input by the user into the electronic device 100, which can be called the dialogue information.

In embodiments of the present application, the historical dialogue information of the user may include natural language information such as dialogues and texts input by the user into the electronic device 100, e.g., dialogue information such as "damaged vehicle component" and "fastest way to repair the vehicle fault". Based on the historical dialogue information of the user, it is possible to analyze whether the user is a vehicle technician, whether the user has vehicle repair experience, and other information, to infer the user-type. The user-type includes, but is not limited to, the following four types.
(1) First user. The first user is used to indicate a user who needs a detailed diagnostic solution. Specifically, the first user indicates a user who is a vehicle technician but has insufficient vehicle repair experience and needs a detailed vehicle diagnostic solution.
(2) Second user. The second user is used to indicate a user who needs a brief diagnosis solution. Specifically, the second user indicates a user who is a vehicle technician and has sufficient vehicle repair experience and only needs a brief vehicle diagnostic solution.
(3) Third user. The third user is used to indicate a user who needs cost and time control. Specifically, the third user indicate a user who is a vehicle owner, has insufficient vehicle repair experience, and considers entrusting a repairman to repair the vehicle, is concerned about the cost and time of repair in vehicle diagnosis, and needs a cost-effective vehicle diagnostic solution.
(4) Fourth user. The fourth user is used to indicate a user who needs the price and purchase manner of the vehicle component(s). Specifically, the fourth user indicates a user who is a vehicle owner, has certain vehicle repair experience, considers changing the vehicle component to repair the vehicle by himself, is concerned about the price and purchase manner of the component in vehicle diagnosis, and needs a vehicle diagnostic solution with the price and purchase manner of the vehicle component.

In embodiments of the present application, the user profile obtained by the electronic device 100 can indicate the user-type of the user.

Exemplarily, the electronic device 100 respectively assigns weight values to the above four user-types based on the vehicle diagnostic data and the historical dialogue information of the user, and determines the user-type with the highest weight value.

For example, based on the vehicle ECU data and the historical dialogue information of the user, the electronic device 100 assigns weights of 0.2, 0.1, 0.6, and 0.3 to the four user-types respectively, indicating that the first user-type is the third user and the user is needed to be provided with a cost-effective vehicle diagnostic solution. The range of weights is shown as 0 to 1 as an example, and there is no restriction on the specific range of weights of different user-types.

In embodiments of the present application, the electronic device 100 inputs the vehicle diagnostic data and the historical dialogue information of the user into the second model, to obtain the user profile output by the second model. The second model is used to calculate the weight of each user-type, and the user-type with the highest weight is determined as the first user-type. The weight indicates the degree of correspondence between the dialogue information and the user-type. The second model can be a related model based on natural language processing technology, such as a large language model.

For example, the historical dialogue information of the user may include dialogue information about "brief vehicle repair solution", "vehicle technician" and other related contents. The electronic device 100 inputs the historical dialogue information of the user into the second model, and the second model may assign the highest weight to the second user and determine that the second user is the first user-type. For example, the weights of 0.2, 0.6, 0.1, and 0.1 are assigned to the first user, the second user, the third user, and the fourth user respectively.

In some implementations, the electronic device 100 can calculate the weight of each user-type through the preset classification rule. By using the preset classification rule, keyword detection can be performed on the historical dialogue information of the user and the vehicle diagnostic data obtained by the electronic device 100, and the weight of each user-type is calculated based on the number of detected keywords corresponding to each user-type.

Exemplarily, different users may correspond to different keywords. Specifically, the keyword corresponding to the first user may include "technician", "novice" and "detailed diagnostic solution", etc. The keyword corresponding to the second user may include "technician", "veteran", and "brief diagnostic solution", etc. The keyword corresponding to the third user may include "owner", "cost-effective", "repair cost", and "repair time", etc. The keyword corresponding to the fourth user may include "owner", "owner repair solution", "price of vehicle component" and "purchase manner of vehicle component", etc. Embodiments of the present application does not limit the specific keywords corresponding to different users.

For example, the historical dialogue information of the user may include dialogue information such as "detailed vehicle repair solution" and "vehicle technician", and the dialogue information best matches the keywords corresponding to the first user (e.g., "technician", "novice", and "detailed diagnostic solution"), so it is determined that the user-type most likely belongs to the first user. Then, based on the historical dialogue information of the user, the electronic device 100 assigns the highest weight to the first user, for example, assigns weights of 0.6, 0.2, 0.1, and 0.1 to the first user, the second user, the third user, and the fourth user, respectively.

In embodiments of the present application, the electronic device 100 can generate a personalized vehicle diagnostic solution corresponding to the user through the first model based on the obtained user profile. Specifically, under the same set of vehicle diagnostic data, the specific contents of the vehicle diagnostic solutions generated for different user-types are different. For example, if the vehicle diagnostic data is a DTC indicating a tire sensor fault, the vehicle diagnostic solution for the first user will display a detailed solution for repairing the vehicle tire and replacing the sensor. The vehicle diagnostic solution for the second user will display a brief solution for repairing the vehicle tire sensor fault. The vehicle diagnostic solution for the third user will display nearby vehicle repair units and estimate the cost and time of vehicle repair. The vehicle diagnostic solution for the fourth user will display the price and purchase manner of the vehicle tire sensor.

In some implementations, the electronic device 100 may include a data management system. After the vehicle diagnostic data of the vehicle 200 is received, the vehicle diagnostic data may be stored in a database through the data management system. Furthermore, after the dialogue data input by the user is received, the dialogue data of the user may be stored in the database through the data management system as the historical dialogue data. The data management system may organize and sort the data obtained by the electronic device 100, for example, the data may be stored in the database in the order of the time of acquisition.

In other implementations, the electronic device 100 may input the historical dialogue information of the user into the second model, and the second model generates the user profile only through the historical dialogue information of the user, and then generates the vehicle diagnostic solution through the first model based on the user profile. For example, the user sends the dialogue information to the electronic device 100, and when the vehicle diagnostic report expected by the user in the dialogue information does not involve vehicle diagnostic data, the electronic device 100 may treat a reply of the question to the user as the vehicle diagnostic solution without using the vehicle diagnostic data. The first model includes a language model, and the first model is a model obtained by: inputting the user-type and the corresponding prompt information and training the output vehicle diagnostic solution until the vehicle diagnostic solution is consistent with the preset vehicle diagnostic solution.

It should be understood that the communication system in FIG. 1 takes the communication between one electronic device 100 and one vehicle 200 as an example. In practical applications, the number of electronic devices 100 in the communication system can be greater. In this case, one vehicle 200 can communicate with multiple electronic devices 100 at the same time. In the following introduction, the method for generating the vehicle diagnostic solution provided in embodiments of the present application can be applied to the vehicle diagnostic communication system shown in FIG. 1.

In some implementations, the communication system in FIG. 1 may further include other communication devices, and the communication between the electronic device 100 and the vehicle 200 is achieved through the other communication devices. For example, the communication system may further include a server, and the electronic device 100 may be connected to the server through a network, and the server is connected to the vehicle 200 through the network. The electronic device 100 may obtain the vehicle diagnostic data from the vehicle 200 through the server. Alternatively, the server may also store the vehicle diagnostic data of the vehicle 200, and the electronic device 100 directly obtains the vehicle diagnostic data from the server. If embodiments of the present application are applied to the communication system shown in FIG. 1, the electronic device described below may be the electronic device 100 in the communication system shown in FIG. 1. It should be noted that the communication system in embodiments of the present application only takes the electronic device 100 and the vehicle 200 as an example, and is not limited to the electronic device 100.

The following three embodiments are used to describe a method and apparatus for generating vehicle diagnostic solution, an electronic device, and a storage medium. Embodiment 1 is used to describe generating the vehicle diagnostic solution by the electronic device, Embodiment 2 is used to describe generating a user profile by using a second model, and Embodiment 3 is used to describe generating a vehicle diagnostic solution by using a first model.

### Embodiment 1

FIG. 2 shows a flow chart of generating a vehicle diagnostic solution by an electronic device provided in embodiments of the present application. The details are described below.

S101, historical dialogue information of a user and vehicle diagnostic data are obtained.

In embodiments of the present application, the historical dialogue information of the user may be dialogue information stored in the electronic device, or may be dialogue information input by the user into the electronic device. The electronic device may include a diagnostic instrument, a user terminal, a mobile device, a mobile station, a mobile unit, an M2M terminal, a wireless unit, a terminal device, a remote unit, a terminal agent, a mobile client, etc. The electronic device may deploy a language processing model locally to obtain the historical dialogue information of the user in the language processing model. Alternatively, the electronic device may connect to a server through a network, to obtain the historical dialogue information of the user in a language processing model deployed by the server.

In some implementations, the historical dialogue information of the user may include natural language information such as dialogues and texts input by the user into the electronic device, e.g., dialogue information such as "damaged vehicle component" and "fastest way to repair the vehicle fault", which contains the personalized requirements of the user for vehicle diagnosis and can be used to infer the user-type.

In some implementations, before the electronic device obtains the historical dialogue information of the user and the vehicle diagnostic data, a connection between the electronic device and the vehicle is established in the vehicle diagnostic system. The vehicle diagnostic data may be data obtained by the electronic device from the vehicle, for fault detection, performance optimization, or vehicle health evaluation. Exemplarily, the vehicle diagnostic data includes vehicle DTC, vehicle real-time sensor data, vehicle emission data, and vehicle ECU control data, etc. The electronic device includes the diagnostic instrument and the user terminal, the diagnostic instrument is in communication connection with the vehicle, and the user terminal is in communication connection with the vehicle and/or the diagnostic instrument.

In some implementations, the electronic device and the vehicle can establish a connection via a wireless interface, such as a wireless network, and the electronic device obtains the vehicle diagnostic data of the vehicle. The electronic device and the vehicle can also establish a connection via a wired interface, such as an OBD interface, and the electronic device obtains the vehicle diagnostic data of the vehicle.

S102, a user profile is generated based on the historical dialogue information of the user and the vehicle diagnostic data.

In embodiments of the present application, the user profile includes, but is not limited to, the following user-types: a first user, a second user, a third user, and a fourth user. A first user-type is determined from the above-mentioned multiple user-types.

Exemplarily, the first user, the second user, the third user, and the fourth user may indicate different users, respectively.

The first user indicates a vehicle technician who has insufficient experience in vehicle repair.

The second user indicates a vehicle technician who has sufficient experience in vehicle repair.

The third user indicates a vehicle owner who has insufficient experience in vehicle repair and considers entrusting a repairman to repair the vehicle and is concerned about the cost and time of repair in vehicle diagnosis.

The fourth user indicates a vehicle owner who has some experience in vehicle repair, considers changing the vehicle component to repair the vehicle by himself, and is concerned about the price and purchase manner of the component in vehicle diagnosis.

In embodiments of the present application, the electronic device may classify the vehicle diagnostic data and the historical dialogue information of the user using a preset rule or a machine learning model. For example, the electronic device inputs the vehicle diagnostic data and the historical dialogue information of the user into a second model to obtain the user profile output by the second model. The second model may receive the vehicle diagnostic data and the historical dialogue information of the user and output the corresponding user profile. The second model may be a related model based on natural language processing technology, such as a large language model.

In some implementations, the electronic device determines the keyword corresponding to the user-type, detects whether the vehicle diagnostic data and the historical dialogue information of the user contain the keyword corresponding to the user-type, to determine the user profile. The keyword used to determine the user-type in the electronic device can be preset in the electronic device. Embodiments of the present application does not limit the specific way in which the electronic device classifies the vehicle diagnostic data and the historical dialogue information of the user.

In embodiments of the present application, the second model is obtained by: inputting the dialogue information and the vehicle diagnostic data, and training to calculate the weight of each of the user-types, until the weight of each of the user-types is the same as a preset weight.

In embodiments of the present application, the electronic device inputs the dialogue information and the vehicle diagnostic data into the second model, and obtains the user profile generated by the second model, where the user profile includes the first user-type determined from the multiple preset user-types and the first user-type corresponds to the user.

Specifically, the second model is used to calculate the weight of each user-type, and the user-type with the highest weight is determined as the first user-type, and the weight indicates a degree of correspondence between the dialogue information and the user-type. The second model assigns weight values to different user-types, and the user-type with the highest weight value is determined as the first user-type.

For example, based on the vehicle ECU data and the historical dialogue information of the user, the second model assigns weights of 0.2, 0.1, 0.6, and 0.3 to the first user, the second user, the third user, and the fourth user, respectively, indicating that the first user-type is the third user and the user is needed to be provided with a cost-effective vehicle diagnostic solution. The range of weights is shown as 0 to 1 as an example, and there is no restriction on the specific range of weights of different user-types.

Exemplarily, based on the vehicle DTC data and the historical dialogue information of the user, the second model assigns weights of 0.3, 0.5, 0.1, and 0.1 to the first user, the second user, the third user, and the fourth user, respectively, indicating that the first user-type is the second user, who is a vehicle technician with rich vehicle repair experience and needs to be provided with a brief vehicle diagnostic solution.

In other implementations, the electronic device may obtain the dialogue information, generate the user profile based on the dialogue information, and determine the personalized diagnostic solution corresponding to the first user-type in the user profile.

Specifically, the electronic device inputs the obtained historical dialogue information of the user into the second model, obtains the user profile output by the second model, and determines the first user-type. The second model may receive the historical dialogue information of the user and output the corresponding user profile.

In some implementations, the electronic device can calculate the weight of each user-type through the preset classification rule. By using the preset classification rule, keyword detection can be performed on the historical dialogue information of the user and the vehicle diagnostic data obtained by the electronic device, and the weight of each user-type is calculated based on the number of detected keywords corresponding to each user-type.

Exemplarily, different users may correspond to different keywords. Specifically, the keyword corresponding to the first user may include "technician", "novice" and "detailed diagnostic solution", etc. The keyword corresponding to the second user may include "technician", "veteran", and "brief diagnostic solution", etc. The keyword corresponding to the third user may include "owner", "cost-effective", "repair cost", and "repair time", etc. The keyword corresponding to the fourth user may include "owner", "owner repair solution", "price of vehicle component" and "purchase manner of vehicle component", etc. Embodiments of the present application does not limit the specific keywords corresponding to different users.

For example, the historical dialogue information of the user may include dialogue information such as "vehicle repair solution", and "price of vehicle component", and the dialogue information corresponds to the greatest number of the keywords corresponding to the fourth user (e.g., "vehicle owner", "vehicle owner repair solution", "price of vehicle component", and "purchase manner of vehicle component"), so it is determined that the user-type most likely belongs to the fourth user. Then, based on the historical dialogue information of the user, the electronic device assigns the highest weight to the fourth user, for example, assigning weights of 0.1, 0.1, 0.1, and 0.7 to the first user, the second user, the third user, and the fourth user, respectively.

S103, a personalized diagnostic solution is generated based on the user-type.

In embodiments of the present application, the electronic device invokes the corresponding diagnostic rule according to the determined first user-type, to generate the personalized diagnostic solution. Based on the diagnostic rule, different diagnostic solutions are adopted for different users. Specifically, the personalized diagnostic solutions provided to the first user, the second user, the third user, and the fourth user include, but are not limited to, the following.

For the first user, the diagnostic solution is a detailed and specific troubleshooting step.

For the second user, the diagnostic solution is a brief troubleshooting procedure.

For third user, the diagnostic solution is a high cost-effective repair solution that takes cost and time into consideration.

For the fourth user, the diagnostic solution is a repair solution containing the price and purchase manner of the vehicle component.

Exemplarily, the vehicle diagnostic data is a DTC indicating a tire sensor fault. If the first user-type is the first user, the vehicle diagnostic solution will display a detailed solution for repairing the vehicle tire and replacing the sensor. If the first user-type is the second user, the vehicle diagnostic solution will display a brief solution for repairing the vehicle tire sensor fault. If the first user-type is the third user, the vehicle diagnostic solution will display nearby vehicle repair units and estimate the cost and time of vehicle repair. If the first user-type is the fourth user, the vehicle diagnostic solution will display the price and purchase manner of the vehicle tire sensor.

In embodiments of the present application, the diagnostic rule may include a machine learning model, such as a first model. Based on the first user-type, the electronic device invokes the first prompt information to be input the first model to generate the vehicle diagnostic solution, where the first prompt information is a prompt word indicating the first user-type. The first model may be a related model based on natural language processing technology, such as a large language model. The first user-type may be determined by the electronic device through the second model.

For example, the first user-type obtained by the electronic device through the second model is the second user, and the user feature corresponding to the second user includes: being a vehicle technician, having rich vehicle repair experience, and only requiring a brief vehicle diagnostic solution. The prompt word corresponding to the second user may include the prompt word for indicating the feature of the second user such as "brief solution", "vehicle technician", and "vehicle fault repair".

For another example, the first user-type obtained by the electronic device through the second model is the fourth user, and the user feature corresponding to the fourth user includes: being a vehicle owner, having rich experience in vehicle repair, and needing the price and purchase manner of the component in vehicle repair. The prompt word corresponding to the fourth user may include the prompt word for indicating the feature of the fourth user such as "vehicle fault component", "vehicle owner", "component purchase manner" and "vehicle repair manner". Embodiments of the present application does not limit the specific prompt words corresponding to different users.

In embodiments of the present application, the first model is obtained by: inputting the user-type and the corresponding prompt information and training the output vehicle diagnostic solution until the vehicle diagnostic solution is consistent with the preset vehicle diagnostic solution.

In some implementations, the electronic device can display the vehicle diagnostic solution to the user. For example, the electronic device can display the vehicle diagnostic solution to the user through a display interface, and the electronic device can also broadcast the vehicle diagnostic solution to the user through a voice playback device such as a speaker. Embodiments of the present application does not limit the specific form in which the electronic device displays the vehicle diagnostic solution to the user.

### Embodiment 2

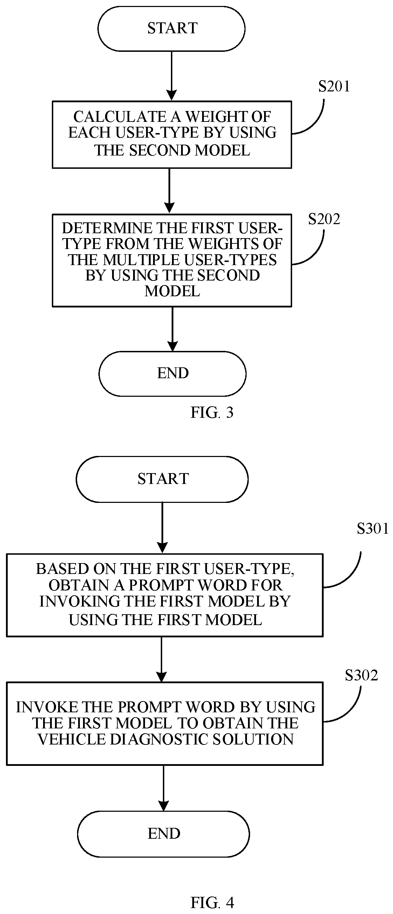

FIG. 3 is a flow chart of generating a user profile by using a second model provided in embodiments of the present application. The details are described below.

S201, a weight of each user-type is calculated by using the second model.

In embodiments of the present application, the electronic device inputs the historical dialogue information of the user and the vehicle diagnostic data into the second model, where multiple user-types are preset in the second model, and weights for the preset multiple user-types are input.

For example, the historical dialogue information of the user may include "detailed fault report", indicating that the user needs a detailed vehicle diagnostic solution. The second model, based on the vehicle ECU data and the historical dialogue information of the user, assigns weights of 0.6, 0.1, 0.2, and 0.1 to the first user, the second user, the third user, and the fourth user, respectively, indicating that the probability that the user-type corresponding to the vehicle ECU data and the historical dialogue information of the user is the first user is the highest. The specific weights of the first user, the second user, the third user, and the fourth user can be in the range of 0 to 1, and embodiments of the present application does not limit the specific the weights of the first user, the second user, the third user, and the fourth user.

In embodiments of the present application, the second model is a trained model obtained by inputting the preset dialogue information of the user and vehicle diagnostic data and training the model to calculate the weight of each user-type until the weight of each user-type is the same as the preset weight.

In embodiments of the present application, before the weight of each user-type is calculated though the second model, the electronic device can obtain the historical dialogue information of the user and the vehicle diagnostic data, and generate the user profile through the second model. The user profile includes the weight of each user-type.

In some implementations, the electronic device may only obtain the dialogue information, input the dialogue information into the second model to generate the user profile, and determine the weights of different users in the multiple preset user-types.

For example, the historical dialogue information of the user may include "fastest way to repair the vehicle" and "lowest cost of vehicle repair", etc., indicating that the user needs a most cost-effective vehicle diagnostic solution. The second model assigns weights of 0.1, 0.1, 0.7, and 0.1 to the first user, the second user, the third user, and the fourth user, respectively, based on the historical dialogue information of the user.

S202, the first user-type is determined from the weights of the multiple user-types by using the second model.

In embodiments of the present application, the user profile is generated based on the dialogue information and the vehicle diagnostic data, where the user profile includes the first user-type determined from the multiple preset user-types, and the first user-type corresponds to the user. Exemplarily, through the second model, based on the magnitude of the weight, the user-type with the largest weight is determined as the first user-type.

For example, the second model obtains that the weights of the first user, the second user, the third user, and the fourth user are 0.6, 0.1, 0.2, and 0.1 respectively, indicating that the first user-type is the first user and the vehicle diagnostic solution with detailed repair steps needs to be provided to the user.

For another example, the second model obtains that the weights of the first user, the second user, the third user, and the fourth user are 0.3, 0.1, 0.1, and 0.5 respectively, indicating that the first user-type is the fourth user and the vehicle diagnostic solution with the vehicle component price and purchase manner needs to be provided to the user.

### Embodiment 3

FIG. 4 is a flow chart of generating a vehicle diagnostic solution by using a first model provided in embodiments of the present application. The details are described below.

S301, based on the first user-type, a prompt word for invoking the first model is obtained by using the first model.

In embodiments of the present application, for the first model, based on the obtained first user-type in the user profile, the corresponding prompt word is obtained from the multiple preset prompt words and is input the first model. Specifically, the prompt words corresponding to different user-types have different specific contents.

For example, the preset prompt word corresponding to the first model may include "detailed solution", "brief solution", "high cost-effective solution", and "component price and purchase manner solution", which are used to generate vehicle diagnostic solutions for the user-types of the first user, the second user, the third user, and the fourth user, respectively. Embodiments of the present application does not limit the specific content of the prompt words corresponding to different user-types.

S302, the prompt word is invoked by using the first model to obtain the vehicle diagnostic solution.

In embodiments of the present application, the determined prompt word is input into the first model and the vehicle diagnostic solution that meets the user-type is generated based on the prompt word.

For example, for the first model, if the first user-type obtained is the third user and the corresponding prompt word includes "high cost-effective solution", then the first model generates based on the prompt word the most cost-effective vehicle diagnostic solution for vehicle repair.

For another example, for the first model, if the first user-type obtained is the second use and the corresponding prompt word includes "brief vehicle repair solution", then the first model generates based on the prompt word the brief vehicle diagnostic solution for vehicle repair.

Specifically, the vehicle diagnostic solutions generated for the prompt words corresponding to different user-types have different specific contents. For example, if the vehicle diagnostic data is a DTC indicating a tire sensor fault, the vehicle diagnostic solution for the first user will display a detailed solution for repairing the vehicle tire and replacing the sensor. The vehicle diagnostic solution for the second user will display a brief solution for repairing the vehicle tire sensor fault. The vehicle diagnostic solution for the third user will display nearby vehicle repair units and estimate the cost and time of vehicle repair. The vehicle diagnostic solution for the fourth user will display the price and purchase manner of the vehicle tire sensor.

The first model is obtained by: inputting the user-type and corresponding prompt information, and training to output the vehicle diagnostic solution, until the vehicle diagnostic solution is consistent with the preset vehicle diagnostic solution.

In some implementations, after the vehicle diagnostic solution is obtained, for the first model, the vehicle diagnostic solution is displayed to the user through the electronic device. For example, for the first model, the vehicle diagnostic solution is displayed to the user through a display interface of the electronic device, or the vehicle diagnostic solution is broadcast to the user through a speaker of the electronic device, etc. The embodiments of the present application are not limited herein.

In other implementations, through the first model, the historical dialogue information of the user can be input into the second model, and only through the historical dialogue information of the user, the user profile is generated through the second model, and then based on the user profile, the vehicle diagnostic solution is generated through the first model. For example, the dialogue information input by the user is obtained by the first model, and when the vehicle diagnostic report expected by the user in the dialogue information does not involve vehicle diagnostic data, the first model may treat a reply of the question to the user as the vehicle diagnostic solution without using the vehicle diagnostic data. The first model includes a language model, and the first model is obtained by: inputting the user-type and the corresponding prompt information and training the output vehicle diagnostic solution until the vehicle diagnostic solution is consistent with the preset vehicle diagnostic solution.

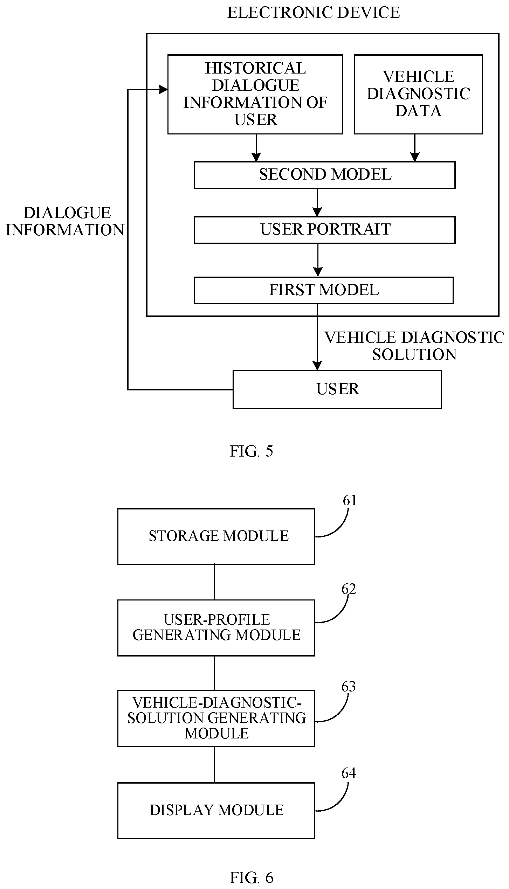

FIG. 5 is a schematic diagram of obtaining a vehicle diagnostic solution by a user provided in embodiments of the present application. The dialogue information is input to the electronic device by the user, and the electronic device generates the vehicle diagnostic solution and displays the vehicle diagnostic solution to the user, as described in detail as follows.

In embodiments of the present application, the dialogue information input by the user to the electronic device can be stored in the electronic device as historical dialogue information of the user. After the electronic device receives an instruction for outputting the vehicle diagnostic solution to the user, the electronic device can input the historical dialogue information of the user and the vehicle diagnostic data into the second model based on the historical dialogue information of the user and the vehicle diagnostic data. The second model generates the user profile and determines the first user-type. The electronic device inputs the generated user profile into the first model, the vehicle diagnostic solution is generated by the first model, and the generated vehicle diagnostic solution is displayed to the user. Regarding the specific implementation scheme of generating the vehicle diagnostic solution and displaying it to the user by the electronic device, reference can also be made to S101 to S103 in FIG. 2 above, which will not be repeated herein.

In embodiments of the present application, the second model is obtained by: inputting the dialogue information and the vehicle diagnostic data and training to calculate the weight of each user-type until the user-type with the highest weight is the same as the first user-type.

In embodiments of the present application, the first model is obtained by: inputting the user-type and corresponding prompt information and training the output vehicle diagnostic solution.

In some implementations, the electronic device may include a data management system. The electronic device may store the vehicle diagnostic data into a database through the data management system after the vehicle diagnostic data of the vehicle is received. The electronic device may also store the dialogue data of the user into the database as historical dialogue data through the data management system after the dialogue data input by the user is received.

In some implementations, the data management system can organize and sort the data obtained by the electronic device. For example, the vehicle diagnostic data obtained by the electronic device can be stored in the database in the order of the time of acquisition. The historical dialogue information of the user in the electronic device can also be saved in the order of the time of acquisition.

In embodiments of the present application, the vehicle diagnostic system includes a diagnostic instrument, the diagnostic instrument is connected to a vehicle in the vehicle diagnostic system, and the electronic device includes the diagnostic instrument. Exemplarily, when the electronic device is the diagnostic instrument, the electronic device can obtain the vehicle diagnostic data from the vehicle based on the OBD connection between the diagnostic instrument and the vehicle.

In embodiments of the present application, the user-type may include a first user, a second user, a third user, and a fourth user. Specifically, the first user is a vehicle technician with insufficient vehicle repair experience who needs a detailed vehicle diagnostic solution. The second user is a vehicle technician with sufficient vehicle repair experience who only needs a brief vehicle diagnostic solution. The third user is a vehicle owner with insufficient vehicle repair experience who considers entrusting a repairman to repair the vehicle, and is concerned about the cost and time of repair in vehicle diagnosis, and needs a cost-effective vehicle diagnostic solution. The fourth user is a vehicle owner having certain vehicle repair experience who considers changing the vehicle component by himself to repair the vehicle, and is concerned about the price and purchase manner of the component in vehicle diagnosis, and needs a vehicle diagnostic solution with the price and purchase manner of the vehicle component. For details, reference is made to the detailed description of the user-type in the aforementioned FIG. 1.

In embodiments of the present application, the second model is used to calculate the weight of each user-type, and the user-type with the highest weight is determined as the first user-type, and the weight is used to indicate the degree of correspondence between the dialogue information and the user-type. Based on the first user-type, the electronic device invokes the first prompt information to be input the first model to generate the vehicle diagnostic solution, and the first prompt information is a prompt word indicating the first user-type.

In some implementations, the first model and the second model are located in different electronic devices, and the electronic device having the first model can communicate with the electronic device having the second model. After the electronic device having the second model inputs the historical dialogue information and the vehicle diagnostic data into the second model to obtain the user profile, the user profile can be sent to the electronic device having the first model. The electronic device having the first model inputs the user profile into the first model and sends the output vehicle diagnostic solution to the user.

In some implementations, the electronic device can display the vehicle diagnostic solution to the user. For example, the electronic device can display the vehicle diagnostic solution to the user through a display interface, and the electronic device can also broadcast the vehicle diagnostic solution to the user through a voice playback device such as a speaker. Embodiments of the present application does not limit the specific form in which the electronic device displays the vehicle diagnostic solution to the user.

In some implementations, the electronic device may obtain the historical dialogue information, generate the user profile based on the dialogue information, and determine the personalized diagnostic solution corresponding to the first user-type in the user profile.

Specifically, the electronic device inputs the obtained historical dialogue information of the user into the second model, obtains the user profile output by the second model, and determines the first user-type. The second model may receive the historical dialogue information of the user and output the corresponding user profile. Based on the first user-type, the electronic device determines the prompt word input into the first model, generates the vehicle diagnostic solution through the first model, and displays the generated vehicle diagnostic solution to the user.

FIG. 6 is a schematic diagram of modules of an electronic device provided in embodiments of the present application. The electronic device specifically includes the following modules.

A storage module 61 is configured to store dialogue information of a user and vehicle diagnostic data of a vehicle.

A user-profile generating module 62 is configured to input the dialogue information and the vehicle diagnostic data into a second model, to obtain a user profile.

A vehicle-diagnostic-solution generating module 63 is configured to invoke a first model based on a first user-type in the user profile to generate a vehicle diagnostic solution.

A display module 64 is configured to display the vehicle diagnostic solution to the user.

Based on the schematic diagram of the modules of the electronic device shown in FIG. 6, the specific corresponding relationship with the vehicle diagnostic solution generated by the electronic device shown in FIG. 2 is as follows.

The storage module 61 is configured to store the dialogue information and vehicle diagnostic data as shown in S101, and is also used to store the second model as shown in S102, and is also used to store the first model as shown in S103.

The user-profile generating module 62 is configured to execute generating the user profile according to the historical dialogue information of the user and the vehicle diagnostic data as shown in S102.

The vehicle-diagnostic-solution generating module 63 is configured to execute generating the personalized diagnosis solution based on the user-type as shown in S103.

The display module 64 is configured to execute displaying the vehicle diagnostic solution to the user by the electronic device as shown in S103.

In some embodiments, the electronic device may further include a communication module, and the communication module in the electronic device is configured to establish a communication connection with the vehicle in the vehicle diagnostic system. Exemplarily, the electronic device may establish a wired communication connection with the vehicle through an OBD interface, or the electronic device may also establish a remote wireless connection with the vehicle through a wireless network.

The specific implementations of the above-mentioned corresponding steps will not be described in detail in the embodiments of the present application.

It is understandable that the functional division between the modules illustrated in the embodiments of the present application is merely for illustration and does not constitute a limitation on the functions of the electronic device. In other embodiments of the present application, the electronic device may also use modules different from those in the above embodiments or a combination of multiple modules, to implement the functions of the electronic device.

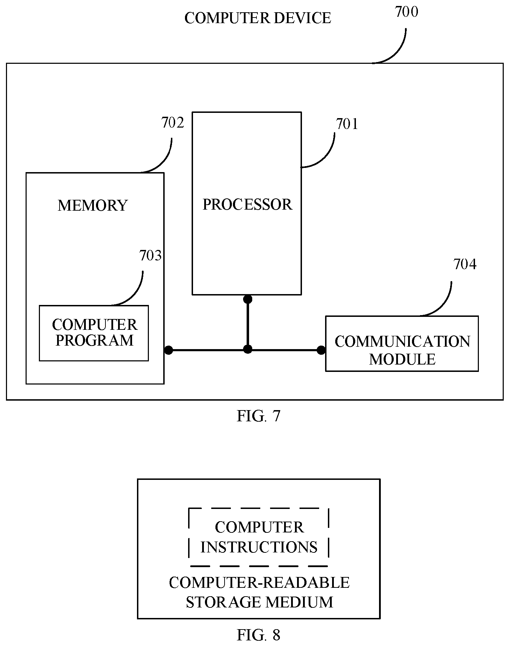

FIG. 7 is a schematic structural diagram of a computer device provided in embodiments of the present application. The computer device 700 includes: a processor 701, a memory 702, a communication module 704, and a computer program 703 stored in the memory 702 and executable on the processor 701. When the processor 701 executes the computer program 703, the steps in the above-mentioned method for generating the vehicle diagnostic solution are implemented.

Exemplarily, the computer program 703 may be divided into one or more units/modules, and the one or more units/modules are stored in the memory 702 and executed by the processor 701 to complete the present application.

The one or more units/modules may be a series of computer program instruction segments capable of completing specific functions, and the instruction segments are used to describe the execution process of the computer program 703 in the computer device 700. For example, the computer program 703 may be used to execute the method for generating the vehicle diagnostic solution by an electronic device as shown in FIG. 2, and the specific functions or mechanisms have been described in the above embodiments and will not be repeated herein.

Those of ordinary skill in the art will appreciate that FIG. 7 is merely an example of a computer device 700 and does not constitute a limitation on the computer device 700. The computer device 700 may include more or fewer components than shown in the figure, or a combination of certain components, or different components. For example, the computer device 700 may also include input and output devices, network access devices, buses, etc.

The processor 701 may be a central processing unit (CPU), or other general-purpose processors, digital signal processors (DSP), application specific integrated circuits (ASIC), field programmable gate arrays (FPGA) or other programmable logic devices, discrete gate or transistor logic devices, discrete hardware components, etc. A general-purpose processor may be a microprocessor or any conventional processor, etc.

In some embodiments, the processor 701 may include one or more interfaces. The interface may include an inter-integrated circuit (I2C) interface, an inter-integrated circuit sound (I2S) interface, a pulse code modulation (PCM) interface, a UART interface, a mobile industry processor interface (MIPI), a GPIO, a subscriber identity module (SIM) interface, an OBD interface, and/or a USB, etc.

It is understandable that the interface connection relationship between the modules illustrated in embodiments of the present application is only a schematic illustration and does not constitute a structural limitation on the computer device 700. In other embodiments of the present application, the computer device 700 may also adopt different interface connection methods in the above embodiments or a combination of multiple interface connection methods.

In some embodiments, the computer device 700 can be connected to internal devices and modules through one or more interfaces. For example, the computer device 700 can be connected to the vehicle in a wired connection manner through an OBD interface.

The memory 702 may be an internal storage unit of the computer device 700, such as a hard disk or a memory of the computer device 700. The memory 702 may also include both an internal storage unit of the computer device 700 and an external storage device.

The memory 702 is used to store the computer program and other programs and data required by the computer device 700. The memory 702 can also be used to temporarily store data that has been output or is to be output, for example, the memory 702 can store historical dialogue information, vehicle diagnostic data, the first model, and the second model, etc.

The communication module 704 can provide wireless communication solutions for application on the computer device 700, including wireless local area networks (WLAN) (such as wireless fidelity (Wi-Fi) networks), Bluetooth (BT), global navigation satellite system (GNSS), frequency modulation (FM), near field communication technology (NFC), infrared technology (IR), etc.

The communication module 704 may be one or more devices integrating at least one communication processing module. The communication module 704 receives electromagnetic waves via the antenna, demodulates and filters the electromagnetic wave signals, and sends the processed signals to the processor 701.

The communication module 704 can also receive the signal to be sent from the processor 701, modulate the frequency of the signal, amplify the signal, and convert it into electromagnetic waves for radiation through the antenna.

Those of ordinary skill in the art can clearly understand that for the convenience and simplicity of description, only the division of the above-mentioned functional units and modules is used as an example. In actual applications, the above-mentioned functions can be distributed and completed by different functional units and modules as needed, that is, the internal structure of the above-mentioned device can be divided into different functional units or modules to complete all or part of the functions described above.

The functional units and modules in the embodiments may be integrated into one processing unit, or each unit may exist physically separately, or two or more units may be integrated into one unit. The above-mentioned integrated units may be implemented in the form of hardware or in the form of software functional units.

In the embodiments of the present application, the specific names of the functional units and modules are only for the convenience of distinguishing each other and are not used to limit the scope of protection of the present application.

It should be understood that each step in the above method embodiment provided in the present application can be completed by an integrated logic circuit of hardware in a processor or by instructions in the form of software. The method steps disclosed in the embodiments of the present application can be directly embodied as being executed by a hardware processor, or by a combination of hardware and software modules in a processor.

The present application also provides a computer program product. The computer program product includes a computer program (also referred to as code, or instruction). When executed, the computer program causes a computer to execute the method executed by the vehicle inspection device in the above embodiment.

The present application also provides a computer-readable storage medium. The computer-readable storage medium stores a computer program (also referred to as code or instruction). When executed, the computer program causes a computer to execute the method executed by the electronic device in any of the above embodiments.

The various implementations of the present application can be combined arbitrarily to achieve different technical effects.

In the foregoing embodiments, all or part of the embodiments may be implemented by software, hardware, firmware, or any combination thereof. When implemented by software, all or part of them may be implemented in the form of a computer program product.

The computer program product includes one or more computer instructions. When the computer program instructions are loaded and executed on a computer, the process or function described in the present application is generated in whole or in part. The computer can be a general-purpose computer, a special-purpose computer, a computer network, or other programmable device.

As shown in FIG. 8, the computer instructions may be stored in a computer-readable storage medium, or transmitted from one computer-readable storage medium to another computer-readable storage medium. For example, the computer instructions may be transmitted from one website site, computer, server, or data center to another website site, computer, server, or data center via wired (e.g., coaxial cable, optical fiber, digital subscriber line) or wireless (e.g., infrared, wireless, microwave, etc.) means.

The computer-readable storage medium may be any available medium accessed by a computer or be a data storage device such as a server or data center that includes one or more available media. The available medium may be a magnetic medium (e.g., a floppy disk, a hard disk, a tape), an optical medium (e.g., a DVD), or a semiconductor medium (e.g., a solid state disk).

The present application also provides a chip system. The chip system includes at least one processor for implementing the functions involved in the method executed by the electronic device in any of the above embodiments.

In one possible design, the chip system further includes a memory. The memory is used to store program instructions and data and is located inside or outside the processor.

The chip system may be composed of the chip, or may include the chip and other discrete devices.

Optionally, the processor in the chip system may be one or more. The processor may be implemented by hardware or by software. When implemented by hardware, the processor may be a logic circuit, an integrated circuit, etc. When implemented by software, the processor may be a general-purpose processor implemented by reading software code stored in the memory.

Optionally, the memory in the chip system may also be one or more. The memory may be integrated with the processor or may be separately arranged with the processor, which is not limited in the embodiments of the present application. Exemplarily, the memory may be a non-volatile processor, such as a read-only memory (ROM), which may be integrated with the processor on the same chip or may be arranged on different chips respectively. The embodiments of the present application do not specifically limit the type of memory and the arrangement of the memory and the processor.

Exemplarily, the chip system may be an FPGA, an ASIC, a system on chip (SoC), a CPU, a network processor (NP), a DSP, a microcontroller unit (MCU), a programmable logic device (PLD), or other integrated chips.

Those of ordinary skill in the art can understand that all or part of the processes in the aforementioned embodiments can be implemented by instructing the relevant hardware by a computer program. The program can be stored in a computer-readable storage medium. When executed, the program can include the processes in the aforementioned method embodiments. The aforementioned storage medium includes: ROM or random access memory (RAM), magnetic disk or optical disk, and other media that can store program codes.

In short, the above description is only embodiments of the technical solution of the present invention, and is not intended to limit the protection scope of the present invention. Any modifications, equivalents, improvements, etc. made according to the disclosure of the present invention shall be included in the protection scope of the present invention.

## Claims

1. A method for generating a vehicle diagnostic solution, applicable to a vehicle diagnostic scenario and comprising:
obtaining dialogue information and vehicle diagnostic data, wherein the dialogue information is a dialogue input by a user at an electronic device, the vehicle diagnostic data is detection data of a vehicle obtained by the electronic device, and both the vehicle and the electronic device belong to a vehicle diagnostic system;
generating a user profile based on the dialogue information and the vehicle diagnostic data, wherein the user profile comprises a first user-type determined from a plurality of user-types that are preset, and the first user-type corresponds to the user; and
invoking a first model based on the first user-type to generate the vehicle diagnostic solution, and displaying the vehicle diagnostic solution to the user, wherein the first model comprises a language model, and the vehicle diagnostic solution meets requirements of the user.

2. The method of claim 1, wherein generating the user profile based on the dialogue information and the vehicle diagnostic data comprises:
inputting the dialogue information and the vehicle diagnostic data into a second model, to obtain the user profile generated by the second model, wherein the second model is used to calculate a weight of each of the plurality of user-types, and a user-type with a highest weight is determined as the first user-type, and the weight indicates a degree of correspondence between the dialogue information and the user-type.

3. The method of claim 2, wherein the second model is obtained by: inputting the dialogue information and the vehicle diagnostic data, and training to calculate the weight of each of the plurality of user-types, until the weight of each of the plurality of user-types is the same as a preset weight.

4. The method of claim 1, wherein invoking the first model based on the first user-type to generate the vehicle diagnostic solution comprises:
based on the first user-type, invoking first prompt information to be input into the first model to generate the vehicle diagnostic solution, wherein the first prompt information is a prompt word indicating the first user-type.

5. The method of claim 4, wherein the first model is obtained by: inputting the user-type and corresponding prompt information, and training to output the vehicle diagnostic solution, until the vehicle diagnostic solution is consistent with a preset vehicle diagnostic solution.

6. The method of claim 1, wherein the user-type comprises a first user, a second user, a third user, and a fourth user, the first user indicates a user who needs a detailed diagnostic solution, the second user indicates a user who needs a brief diagnostic solution, the third user indicates a user who needs cost and time control, and the fourth user indicates a user who needs a price and purchase manner of a vehicle component.

7. The method of any one of claims 1 to 6, wherein the electronic device comprises a diagnostic device and a user terminal, the diagnostic device is in communication connection with the vehicle, and the user terminal is in communication connection with the vehicle and/or the diagnostic device.

8. An electronic device, comprising:
a storage module configured to store dialogue information of a user and vehicle diagnostic data of a vehicle;
a user-profile generating module configured to input the dialogue information and the vehicle diagnostic data into a second model, to obtain a user profile;
a vehicle-diagnostic-solution generating module configured to invoke a first model based on a first user-type in the user profile to generate a vehicle diagnostic solution; and
a display module configured to display the vehicle diagnostic solution to the user.

9. A computer device, comprising a memory, a processor, and a computer program stored in the memory, wherein the processor executes the computer program to implement the method of any one of claims 1 to 7.

10. A computer-readable storage medium storing computer instructions thereon, which, when executed by a processor, implement the method of any one of claims 1 to 7.
